# EUROPEAN PATENT APPLICATION

(11) **EP 2 338 390 A1**
(43) Date of publication of application: **29.06.2011**
(21) Application number: 09180779.2
(22) Date of filing: 28.12.2009
(51) Int. Cl.: A47J 27/05

(54) **Low temperature steaming functionality - power steering**

(71) Applicant: Koninklijke Philips Electronics N.V., 5621 BA Eindhoven (NL)
(72) Inventor: Van der Vlis, Peter, H, 5600 AE, Eindhoven (NL); Wijma, Willem, S, 5600 AE, Eindhoven (NL); Paauw, Hendrik, K, 5600 AE, Eindhoven (NL); Santalo Barreiro, Alejandro, 5600 AE, Eindhoven (NL); Stolk, Theodoor, 5600 AE, Eindhoven (NL)
(74) Representative: Damen, Daniel Martijn

(57) **Abstract**

A device (100) for heating a load is disclosed. The device (100) comprises at least one heating chamber (110) and a variable-power heating medium-generating unit (120) configured to generate heating medium. The variable-power heating medium-generating unit (120) is fluidly connected with at least one heating chamber (110). On basis of difference between temperature sensed in the device (100) and a predetermined temperature, power of the variable-power heating medium-generating unit (120) can be adjusted such as to enable attaining a desired heating temperature in the heating process of the device (100).

## Description

### FIELD OF THE INVENTION

The present invention is generally related to heating. In particular, the present invention relates to a device for heating a load which for example can be used for cooking different types of food by steaming.

### BACKGROUND OF THE INVENTION

Steaming is a method of cooking using steam, often using a food steamer, or steam cooker, which steam transfers heat to the food to be cooked. In general, food steamers have a compartment that can be filled with water that is to be evaporated and one or more 'baskets' designed to hold food to be cooked. In steam cookers water is in general evaporated by means of a heating element typically situated in the base of the steam cooker. Generally, the resulting steam travels through the baskets of the steam cooker and escapes from the top basket through holes in the lid of the steam cooker.

The heating element of the steam cooker operates at discrete, fixed power levels. During operation of the steam cooker, the heating element of the steam cooker is in general first operated at a relatively high power level for providing a sufficient amount of steam in order to get the steaming process started. Second, after the steaming process has progressed sufficiently at that power level, the heating element of the steam cooker is operated at a lower power level for the remainder of the cooking time. In general, this lower power level is set high enough so as to accommodate for the case when all of the baskets contain food. In other words, the magnitude of the lower power level is set such that the steam cooker is able to sufficiently cook all of the food in the steam cooker in the desired period of time, in the case where all of the baskets of the steam cooker contain food. Thus, operation of steam cookers generally requires a relatively large amount of energy.

US 6658995 B1 discloses a proofer for conditioning dough in a chamber. The proofer comprises an air circulation system including a passageway having an air inlet and an air outlet connected to the chamber. A first fan pulls air into the air inlet from the chamber and expels air from the outlet into the chamber. A fluid reservoir adjacent to the air circulation system is positioned such that air contacts fluid in the reservoir upon actuation of the first fan and flows into the chamber. A heating element heats the fluid in the reservoir. A second fan flows air over at least a portion of the reservoir outside the chamber to cool fluid in the reservoir. The heating element is turned off and the second fan is turned on when the humidity in the chamber reaches a selected level.

### SUMMARY OF THE INVENTION

It is with respect to the above considerations and others that the present invention has been made. The present invention seeks to mitigate, alleviate or eliminate one or more of the above-mentioned deficiencies and disadvantages singly or in combination. In particular, the inventors have realized that it would be desirable to achieve a device for heating a load, which device exhibits reduced energy consumption. The device is particularly suited for heating of loads in the form of food to be cooked, although it is contemplated that the device may be used to heat other types of loads. Furthermore, the inventors have realized that it would be desirable to achieve a device for heating a load, which device is capable of relatively quickly compensate in the heating process for system disturbances resulting in a loss of heat from the device, such as opening a lid, removing and/or replacing a heating chamber, refilling fluid intended for evaporation, etc.

To achieve this, a device having the features as defined in the independent claim is provided. Further advantageous embodiments of the present invention are defined in the dependent claims.

The inventors have realized that when removing the lid of a steam cooker for inserting food in a basket or removing food from a basket and/or inserting or removing a basket, or for refilling the compartment with water, the response time, i.e. the time it takes after such a disturbance until the cooking temperature of the steam cooker is restored to the cooking temperature of the food steamer prior to the disturbance occurred, may be relatively long, as the heating element of the steam cooker operates at fixed power level.

The present invention is based on an idea of steering power of a variable-power vapor-generating unit on basis of a desired cooking temperature whereby a preset cooking temperature in the steam cooker relatively quickly can be attained or re-attained, e.g. after a disturbance in the heating process such as mentioned in the foregoing has occurred. At the same time, the energy consumption may be reduced as further discussed in the following. It is contemplated that the present invention is applicable not only as a kitchen appliance for cooking various types of food, but rather can be applied in various applications for heating a load by means of generating vapor having a relatively high temperature that can be utilized to transfer heat to the load.

According to a first aspect of the present invention, there is provided a device for heating a load. The device comprises at least one heating chamber. Each of the at least one heating chamber is capable of receiving at least a part of the load. The device comprises a variable-power heating medium-generating unit fluidly connected with the at least one heating chamber. The device comprises a temperature sensor adapted to sense the temperature of at least the heating medium. The device comprises a control unit adapted to, on basis of difference between temperature sensed by the temperature sensor and a predetermined temperature, adjust the power of the variable-power heating medium-generating unit.

In other words, a load or part of a load situated in a heating chamber can be heated by means of heat transferred from heating medium that has been generated by the variable-power heating medium-generating unit. For example, the variable-power heating medium-generating unit may comprise one or more heating elements adapted to evaporate a fluid, for instance water, which may contain one or more additives, or any other fluid suitable for contact with food intended for consumption, by transfer of heat generated by the one or more heating elements thereto, thereby generating steam having a relatively high temperature, which steam can be utilized to heat the load or part of the load situated in the heating chamber. The heating temperature, i.e. the temperature of the vapor supplied to the load in the at least one heating chamber, can be controlled by the control unit which adjusts the power of the variable-power heating medium-generating unit. For example, by the adjustment of power of the variable-power heating medium-generating unit performed by the control unit a predetermined heating temperature may be attained.

In this regard, the control unit can be adapted to adjust the amount of power that is input to the variable-power heating medium-generating unit for attaining a predetermined heating temperature.

For example, where the variable-power heating medium generating unit comprises at least one variable-power heating element arranged such as to enable heating a fluid such that the fluid is at least partly evaporated, the control unit may be adapted to control the power input to the at least one variable-power heating element whereby adjustment of the temperature of the at least one heating element can be made.

One or more of the at least one heating chamber can be void of load during operation of the device. For example, where the device is configured to cook food, every heating chamber in the device does not necessarily have to contain food during operation of the device.

By adjusting the power of the variable-power heating medium-generating unit for attaining a particular heating temperature on basis of temperature sensed in the device, the required energy for heating the load can be reduced, as only the power required for attaining the particular heating temperature is used by the device, in contrast to steam cookers wherein the power level is set relatively high, in general higher than actually required for a given load, such as to accommodate for the case when all of the baskets in the steam cooker contain food, as discussed in the foregoing. Thus, by means of utilizing a variable-power heating medium-generating unit the energy consumption by the device is not fixed but based on how many heating chambers in the device that are used and how much each heating chamber is filled (i.e. the size of the load and distribution of the load within the heating chambers).

For example, the control unit may in particular be adapted to adjust the power of the variable-power heating medium-generating unit on basis of difference between a temporal average of temperature sensed by the temperature sensor and the predetermined temperature. Such a configuration may enable an increased flexibility with regards to operation of the device, in particular with regards to performing the heating process of the device.

The device may be arranged such that the at least one heating chamber can be removed from and reattached to the device. Such a configuration may facilitate the insertion of a load or a part of a load into and/or removal of a load or a part of a load from a heating chamber.

The temperature sensor can for example be arranged in the fluid connection between the at least one heating chamber and the variable-power heating medium-generating unit, in one of the at least one heating chamber, in the variable-power heating medium-generating unit, etc., where the temperature sensor may sense the temperature of at least the heating medium.

The heating medium can for example comprise steam or another vapor, or a gas such as (relatively hot) air. In case the heating medium comprises steam or another vapor, the variable-power heating medium-generating unit may be configured to generate the steam or other vapor from water or another fluid, respectively.

The device may comprise a gas transport fluid connection. The gas transport fluid connection comprises an outlet connected to the variable-power heating medium-generating unit and an inlet. The gas transport fluid connection is intended for transport of gas from the inlet to the variable-power heating medium-generating unit via the outlet.

Such a configuration may enable introduction of a gas stream into the variable-power heating medium-generating unit, in particular introduction of a gas stream into heating medium generated by the variable-power heating medium-generating unit, which in turn, due to the fluid connection present between the variable-power heating medium-generating unit and the at least one heating chamber, may enable a quicker distribution of heating medium (or the resulting gas-heating medium mixture, e.g. a mixture of the heating medium and air) to and within the at least one heating chamber. In turn, this may enable reducing the time required to attain a particular heating temperature in the device for heating.

The inlet can for example be fluidly connected with a source for the gas. The source of gas may for example comprise air, e.g., atmospheric air or compressed air. The inlet may for example open into the surroundings of the device.

The temperature sensor may be arranged in the fluid connection between the at least one heating chamber and the variable-power heating medium-generating unit such that it can sense the temperature of the resulting gas-heating medium mixture mentioned in the foregoing.

The introduction of the gas via the gas transport fluid connection may for example be facilitated by an external device such as a compressor unit or blower (e.g., a fan) fluidly coupled to the inlet and to a source for the gas and adapted to supply the gas to the outlet via the gas transport fluid connection. Alternatively or optionally, a blower may be arranged in the gas transport fluid connection. The blower can be configured to draw gas from said inlet and expel gas from said outlet into the variable-power heating medium-generating unit.

Due to the fluid connection present between the variable-power heating medium-generating unit and the at least one heating chamber, such a blower or similar device may be capable of actively distributing heating medium generated by the variable-power heating medium-generating unit to and within the at least one heating chamber, whereby a quicker distribution of heating medium (or gas-heating medium mixture) within the at least one heating chamber may be enabled. The capacity to distribute heating medium generated by the variable-power heating medium-generating unit to and within the at least one heating chamber is in principle limited only by the performance of the blower with regards to transporting gas. In turn, this may enable reducing the time required to attain a particular heating temperature in the device for heating. By such a configuration a temperature difference between different heating chambers (in case of several heating chambers present in the device) can be reduced or even eliminated.

A blower or the like described in the foregoing may be adjustable with regards to gas transport capacity. For example where the blower comprises a fan the rotational speed of the fan may be variable. By adjusting the rotational speed of the fan, the flow rate of the heating medium (or gas-heating medium mixture) in the device may be controlled. Such control may be performed in combination with power steering of the variable-power heating medium-generating unit such as has been described in the foregoing.

Any one of the configurations described in the foregoing comprising a gas transport fluid connection, being capable of distributing heating medium generated by the variable-power heating medium-generating unit within the at least one heating chamber, may enable improving the response time to reach 'steady state' in the heating process carried out by the device after a disturbance in the heating process has occurred or substantially immediately after the heating process has been initiated (i.e. after start-up of the device). Such a disturbance may for example comprise removal of a lid of the device for inserting the load or another part of the load in a heating chamber and/or removal of the load or a part of the load from a heating chamber and/or insertion or removal of a heating chamber, or for refilling fluid intended for evaporation.

In the context of some embodiments of the present invention, by "steady state" it is referred to a state wherein the conditions in the device have been substantially or even completely restored to the conditions in the device as prior to a disturbance such as described in the foregoing occurred, or a state wherein nominal operating conditions of the device have been reached after start-up of the device (i.e. after starting a 'cold' device).

As already indicated in the foregoing, the gas transport fluid connection may be configured such that the inlet opens into air outside the device. Thus, the gas may comprise air present in the surroundings of the device.

Each of the exemplifying configurations described in the foregoing comprising a gas transport fluid connection may enable steaming food at a temperature below 100 °C by drawing in gas, for example air, at a relatively low temperature, for example at about room temperature, which subsequently can be mixed with heating medium such as steam or another vapor generated in the variable-power heating medium-generating unit, thereby enabling producing steam or another vapor having a temperature below 100 °C.

Cooking by steaming at a relatively low temperature may be favorable for a number of different types of food. Steaming fish is used as a non-exhaustive example. Most fish is prepared by adding heat. Under the influence of heat, chemical reactions take place in fish that change the taste and the texture of the fish. The optimal temperature at which to prepare the fish may vary (but in general lies between 55-65 °C) according to different individual's preference for texture and taste. 'Normal' steam (at 100 °C) may cook the fish too rapidly and cause the exterior of the fish to become overcooked. In general there is a relatively large difference between the temperature at the exterior of the fish and in the interior of the fish. The fish may then become dry and/or fall apart easily. By utilizing steam having a temperature below 100 °C overcooking of the exterior of the fish may be mitigated or even prevented. As a result the texture of the cooked fish may be improved.

According to one example the predetermined temperature is below 100 °C. The predetermined temperature may be within a range from about 55 °C to about 100 °C. When preparing meat and fish it is important to control the transformation of muscle proteins to obtain a desired texture of the cooked meat or fish. In meat the texture is mainly determined by collagen in connective tissue. In fish the texture is mainly determined by the fiber-protein myosin. Fish starts to shrink at about 50 °C when water bonded to the fiber-proteins begins to be released. At about 60 °C the fish has become dry. At about 70 °C the fiber-proteins have coagulated and the fish has become dry and stiff. At about 90 °C the fiber-proteins begin to fall apart. At that point the texture of the fish is ruined and the fish is overcooked. Thus, in cooking fish the use of vapor having a relatively low temperature may reduce or even eliminate undesired reactions taking place at temperatures above about 70 °C such as described in the foregoing.

The device may comprise at least one fluid return connection from at least one heating chamber to the variable-power heating medium-generating unit. In other words, the device may comprise a fluid return connection going from at least one heating chamber and back to the variable-power heating medium-generating unit.

As already mentioned in the foregoing, in steam cookers water is usually evaporated by means of a heating element typically situated in the base of the steam cooker. Generally, the resulting steam travels through the basket(s) of the steam cooker and escapes from the top basket through holes in the lid of the steam cooker. The steam escaping from the top basket is expelled into the location where the steam cooker is situated, typically a kitchen. When placing such a steam cooker close to a wall, a cupboard, etc., a significant amount of water is going to condense on the surface of the wall, cupboard, etc. By using a fluid return connection as described in the foregoing this problem may be mitigated or even eliminated.

A fluid return connection such as described in the foregoing may result in an increased heat transfer to the load in the at least one heating chamber, whereby a shorter time period for achieving the desired heating of the load may be enabled, as relatively warm heating medium having transferred heat to the load when passing through the at least one heating chamber can be transported back to the variable-power heating medium-generating unit and mix with heating medium generated at the variable-power heating medium-generating unit. By such a configuration less power supplied to the variable-power heating medium-generating unit may be required while still substantially or even completely achieving the desired heating of the load. As described in the forgoing, the power supplied to the variable-power heating medium-generating unit is controlled by the control unit on basis of temperature sensed by the temperature sensor. The temperature sensor can for example be arranged in the fluid return connection.

Alternatively or optionally, fluid return connection may extend from at least one heating chamber to the gas transport fluid connection.

The at least one heating chamber may be arranged such that at least a portion of the at least one heating chamber can form the fluid return connection. In other words, by the particular form and/or shape of the at least one heating chamber, at least a portion of the at least one heating chamber may form a fluid passage constituting the fluid return connection (e.g., when the at least one heating chamber is mounted in the device). Such a configuration may improve the ease of use as the fluid return connection is integrated into the at least one heating chamber and no additional, separate component may be required. The device may alternatively or in addition become less bulky.

The fluid from which vapor is generated may be selected from a group comprising water, water comprising at least one descaling agent or a mineral, and any fluid suitable for contact with food intended for consumption, such as for example cooking oil.

Thus, as already indicated in the foregoing vapor generated by the variable-power heating medium-generating unit may comprise steam. One or more additives such as a descaling agent (for removing limestone) may be comprised in the fluid (e.g., water). Thus, in the exemplifying case where the fluid comprises water, it is not necessarily meant pure water. It is to be noted that water is an exemplifying choice for the fluid - in general any fluid suitable for contact with consumables may be used in the device.

Each of the at least one heating chamber may be fluidly connectable with at least one heating chamber. Such a configuration may enable arranging a plurality of heating chambers such that they form an interconnected network of heating chambers, such that a fluid path between any two heating chambers can be found.

For example, the device may comprise at least two heating chambers that are arranged in a stacked configuration. Such a configuration may be efficient with regards to minimizing the required space of the device (i.e. make the device less bulky).

The variable-power heating medium-generating unit may be configured such as to be compliant with predetermined criteria of increase in heating medium output in response to increase in power. In other words, the variable-power heating medium-generating unit may be configured to enable a relatively quick response in change of heating medium output responsive to a change in power, e.g. the power that is inputted into the variable-power heating medium-generating unit. For example, in the case where the variable-power heating medium-generating unit comprises a variable-power heating element and a fluid reservoir for holding fluid to be evaporated by heat generated by the variable-power heating element, the fluid reservoir may be adapted such as to only hold a limited or as small as possible amount of water while still being able to substantially or even completely achieve the desired heating process. Such a configuration enables a relatively quick response in change of heating medium (in this case comprising steam) output responsive to a change in power as there is only a relatively small amount of water to heat for generating steam.

The present invention relates to all possible combinations of features recited in the claims.

Further objects and advantages of the various embodiments of the present invention will be described below by means of exemplifying embodiments.

### BRIEF DESCRIPTION OF THE DRAWINGS

Exemplifying embodiments of the invention will be described below with reference to the accompanying drawings, in which:
Fig. 1 is a schematic sectional side view of a device for heating a load according to an exemplifying embodiment of the present invention;
Fig. 2a is a schematic sectional side view of a device for heating a load according to another exemplifying embodiment of the present invention;
Fig. 2b is a schematic sectional side view of a device for heating a load according to another exemplifying embodiment of the present invention; and
Fig. 3 is a schematic block diagram of a device for heating a load according to an exemplifying embodiment of the present invention.

In the accompanying drawings, the same reference numerals denote the same or similar elements throughout the views.

### DETAILED DESCRIPTION

The present invention will now be described more fully hereinafter with reference to the accompanying drawings, in which exemplifying embodiments of the invention are shown. This invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to like or similar elements throughout.

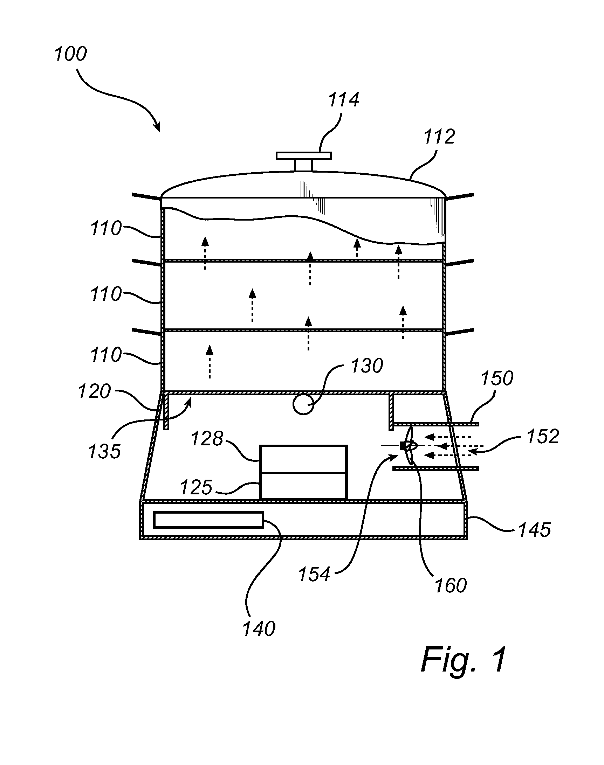

Referring now to Fig. 1, there is shown a schematic sectional side view of a device 100 for heating a load (not shown in Fig. 1) according to an exemplifying embodiment of the present invention. In this example, the device 100 comprises three heating chambers 110 arranged in a stacked configuration. The dashed arrows in Fig. 1 indicate main direction of flow of flow paths of heating medium. Thus, as indicated in Fig. 1 by the dashed arrows, the heating chambers 110 may be interconnected such that each heating chamber 110 is fluidly connectable with at least one other heating chamber 110. The top-most heating chamber 110 in the stacking arrangement of heating chambers 110 depicted in Fig. 1 is coupled to a lid 112 of the device 100. The lid 112 may be used for opening the device 100 for removal, replacement and/or insertion of heating chambers 110 in the device 100. Thus, according to the exemplifying embodiment depicted in Fig. 1 the heating chambers 110 are removably attached to the device 100. Each of the heating chambers 110 is capable of receiving at least a part of the load to be heated. The lid 112 is provided with a handle 114.

The device 100 comprises a variable-power heating medium-generating unit 120 configured to generate vapor from a fluid. The variable-power heating medium-generating unit 120 is in this example fluidly connected with the heating chamber 110 situated at the bottom in the stacking arrangement of heating chambers 110 depicted in Fig. 1. For generating vapor, as exemplary depicted in Fig. 1, the variable-power heating medium-generating unit 120 can for example comprise a variable-power heating element 125 and a fluid reservoir 128 for holding fluid to be evaporated by heat generated by the variable-power heating element 125.

The device 100 comprises a temperature sensor 130. In this example the temperature sensor 130 is arranged in the fluid connection 135 between the variable-power heating medium-generating unit 120 and the heating chamber 110 situated at the bottom in the stacking arrangement of heating chambers 110 depicted in Fig. 1. A control unit 140 is adapted to, on basis of difference between temperature sensed by the temperature sensor 130 and a predetermined temperature, adjust the power of the variable-power heating medium-generating unit 120. As exemplary depicted in Fig. 1, the control unit 140 may be arranged in the base 145 of the device 100.

The device 100 may comprise a power source (not shown in Fig. 1). The power source may be arranged internally (e.g., comprising a battery) or externally (e.g., comprising an electrical coupling that is connectable to the mains) with respect to the device. In the context of some embodiments of the present invention, by "mains" it is referred to an alternating current (AC) electrical power supply, e.g., for the operation of household and commercial electrical appliances and lighting.

According to the embodiment depicted in Fig. 1, a gas transport fluid connection 150 is provided in the device 100. The gas transport fluid connection comprises an inlet 152 and an outlet 154 connected to the variable-power heating medium-generating unit 120. The gas transport fluid connection is intended for transport of gas from the inlet 152 to the variable-power heating medium-generating unit 120 via the outlet 154. The gas transport fluid connection 150 is optional.

The device 100 comprises a blower 160 arranged in the gas transport fluid connection 150. The blower 160 is configured to draw gas from the inlet 152 and expel gas from outlet 154 into the variable-power heating medium-generating unit 120. The blower 160 is optional. Alternatively or optionally, a compressor unit or the like (not shown in Fig. 1) may replace or supplement the blower 160. Such a blower 160 or compressor unit or the like can alternatively or optionally be arranged externally with respect to the device 100. In such a case the blower 160 or compressor unit or the like can be fluidly connected with the inlet 152 by means of a suitable coupling means such as a pipe or a conduit or the like (not shown in Fig. 1).

Although the device 100 comprises three heating chambers 110, a device according to the present invention may comprise any number of heating chambers depending on capacity requirements, user needs and/or design requirements. For example, a device according to the present invention may comprise one, two, four, five, six, seven, eight, nine or ten or more heating chambers as required/needed.

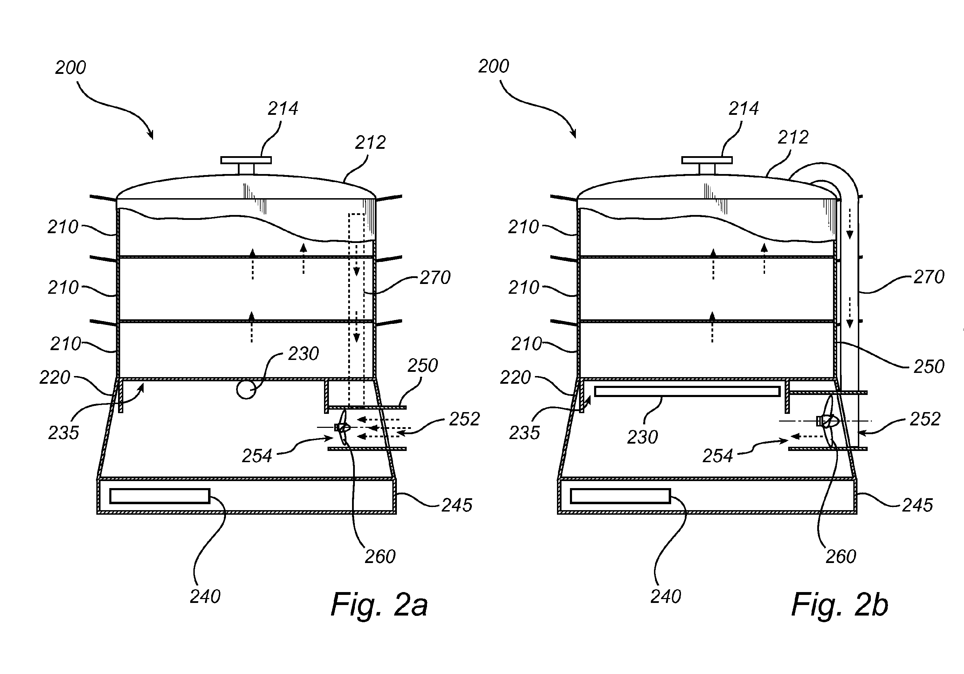

Referring now to Fig. 2a, there is shown a schematic sectional side view of a device 200 for heating a load (not shown in Fig. 2a) according to an exemplifying embodiment of the present invention. The device 200 comprises: heating chambers 210, a lid 212 comprising a handle 214, a variable-power heating medium-generating unit 220, a temperature sensor 230 arranged in a fluid connection 235 between the variable-power heating medium-generating unit 220 and the heating chamber 210 situated at the bottom in the stacking arrangement of heating chambers 210 depicted in Fig. 2a, a control unit 240, a base 245, a gas transport fluid connection 250 comprising an inlet 252 and an outlet 254, and a blower 260. According to the depicted embodiment, the temperature sensor 230 is arranged in a fluid connection 235 between the variable-power heating medium-generating unit 220 and a heating chamber 210. The function and use of these components are similar to or same as the function and use of the components comprised in the device 100 described with reference to Fig. 1. Detailed description of these components with respect to Fig. 2a is therefore omitted.

With further reference to Fig. 2a, the device 200 comprises a fluid return connection 270 going from the top-most heating chamber 210 in the stacking arrangement of heating chambers 210 depicted in Fig. 2a to the variable-power heating medium-generating unit 220.

The fluid return connection 270 can according to one example be comprised by a number of connectable fluid return connection portions (not shown in Fig. 2a). For example, where the heating chambers in the device are arranged in a stacked configuration or in another interconnected configuration, each heating chamber can arranged such that at least a portion of the heating chamber can form a respective fluid return connection portion, wherein when the heating chambers are in an assembled state (e.g., stacked), the fluid return connection is formed by each of the fluid return connection portions being connected to at least one other fluid return connection portion.

Referring now to Fig. 2b, there is shown a schematic sectional side view of a device 200 for heating a load (not shown in Fig. 2b) according to an exemplifying embodiment of the present invention, similar to the device 200 depicted in Fig. 2a. However, in contrast to Fig. 2a, the fluid return path 270 goes from the top-most heating chamber 210 in the stacking arrangement of heating chambers 210 depicted in Fig. 2b to the gas transport fluid connection 250.

The dashed arrows in Figs. 2a and 2b indicate main direction of flow of flow paths of heating medium.

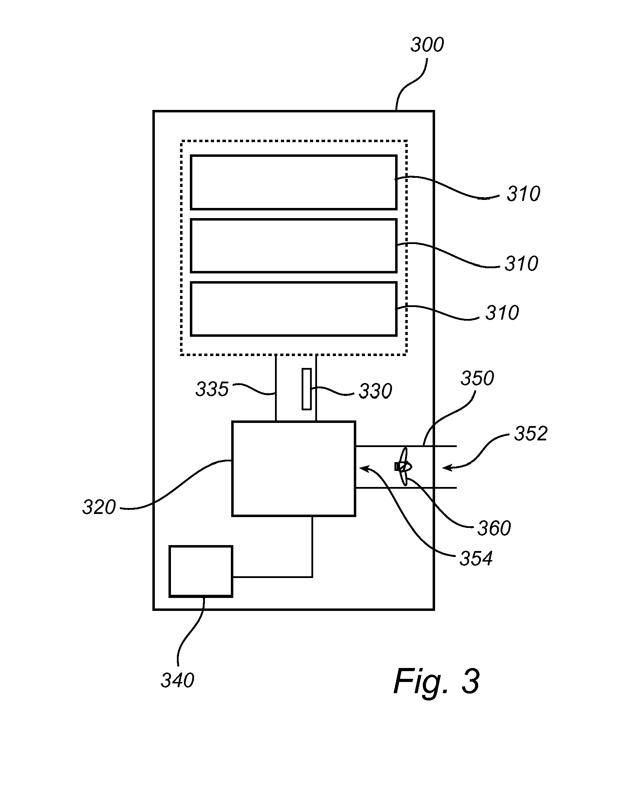

Referring now to Fig. 3, there is shown a schematic block diagram of a device 300 for heating a load (not shown in Fig. 3) according to an exemplifying embodiment of the present invention. The device 300 comprises: heating chambers 310, a variable-power heating medium-generating unit 320, a temperature sensor 330, a control unit 340, a gas transport fluid connection 350 comprising an inlet 352 and an outlet 354, and a blower 360. According to the depicted embodiment, the temperature sensor 330 is arranged in a fluid connection 335 between the variable-power heating medium-generating unit 320 and a heating chamber 310. The function and use of these components are similar to or same as the function and use of the components comprised in the devices 100 and 200 described with reference to Fig. 1 and Figs. 2a and 2b, respectively. Detailed description of these components with respect to Fig. 3 is therefore omitted.

The drawings depict the exemplifying case where the temperature sensor is arranged in a fluid connection between the variable-power heating medium-generating unit and a heating chamber. However, the temperature sensor may be arranged in locations in the device other than in that fluid connection, for example in the variable-power heating medium-generating unit, in a heating chamber, in a fluid return path, under the lid of the device, etc.

It is contemplated that the embodiments of the present invention as described with reference to the appended drawings is applicable not only as a kitchen appliance for cooking various types of food (e.g. constituting a steam cooker), but rather can be applied in various applications for heating a load by means of generating heating medium having a relatively high temperature that can be utilized to transfer heat to the load.

In conclusion, a device for heating a load is disclosed. The device comprises at least one heating chamber and a variable-power heating medium-generating unit configured to generate heating medium. The variable-power heating medium-generating unit is fluidly connected with at least one heating chamber. On basis of difference between temperature sensed in the device and a predetermined temperature, power of the variable-power heating medium-generating unit can be adjusted such as to enable attaining a desired heating temperature in the heating process of the device.

Although exemplary embodiments of the present invention have been described herein, it should be apparent to those having ordinary skill in the art that a number of changes, modifications or alterations to the invention as described herein may be made. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

1. A device (100; 200; 300) for heating a load, comprising:
at least one heating chamber (110; 210; 310), each of the at least one heating chamber being capable of receiving at least a part of the load;
a variable-power heating medium-generating unit (120; 220; 320) fluidly connected with said at least one heating chamber;
a temperature sensor (130; 230; 330) adapted to sense the temperature of at least the heating medium; and
a control unit (140; 240; 340) adapted to, on basis of difference between temperature sensed by the temperature sensor and a predetermined temperature, adjust the power of the variable-power heating medium-generating unit.

2. A device according to claim 1, further comprising:
a gas transport fluid connection (150; 250; 350), comprising an outlet (154; 254; 354) connected to the variable-power heating medium-generating unit and an inlet (152; 252; 352), for transport of gas from said inlet to the variable-power heating medium-generating unit via said outlet.

3. A device according to claim 2, further comprising:
a blower (160; 260; 360) arranged in the gas transport fluid connection, the blower being configured to draw gas from said inlet and expel gas from said outlet into the variable-power heating medium-generating unit.

4. A device according to claim 2 or 3, wherein the gas transport fluid connection is configured such that the inlet opens into air outside said device, wherein said gas comprises air.

5. A device according to any one of claims 1-3, wherein the predetermined temperature is within a range from about 55 °C to about 100 °C.

6. A device according to claim 1, further comprising at least one fluid return connection (270) from at least one heating chamber to the variable-power heating medium-generating unit.

7. A device according to claim 2 or 3, further comprising at least one fluid return connection (270) from at least one heating chamber to the gas transport fluid connection.

8. A device according to claim 6 or 7, wherein the at least one heating chamber is arranged such that at least a portion of the at least one heating chamber can form the fluid return connection.

9. A device according to claim 1, wherein the variable-power heating medium-generating unit is configured to generate vapor from a fluid, wherein the heating medium comprises the vapor.

10. A device according to claim 1, wherein the fluid from which vapor is generated is selected from a group comprising:
water;
water comprising at least one descaling agent; and
any fluid suitable for contact with food intended for consumption.

11. A device according to claim 1, wherein each of the at least one heating chamber is fluidly connectable with at least one other heating chamber.

12. A device according to claim 1 or 11, comprising at least two heating chambers arranged in a stacked configuration.

13. A device according to claim 1, arranged such that the at least one heating chamber is removably attached to the device.

14. A device according to claim 1, wherein the control unit is further adapted to adjust the power of the variable-power heating medium-generating unit on basis of difference between a temporal average of temperature sensed by the temperature sensor and the predetermined temperature.

15. A device according to claim 1, wherein the variable-power heating medium-generating unit is configured such as to be compliant with predetermined criteria of increase in heating medium output in response to increase in power.
